# FASCICULE DE BREVET EUROPEEN

(11) **EP 3 271 962 B1**
(45) Date de publication et mention de la délivrance du brevet: **10.04.2019**
(21) Numéro de dépôt: 16712065.8
(22) Date de dépôt: 18.03.2016
(51) Int. Cl.: H01M 8/18, C25B 1/02, H01M 16/00, H01M 8/04, C25B 15/08, C25B 1/04, C25B 9/20, H01M 8/04082, H01M 8/04276, H01M 8/04291

(54) **PROCÉDÉ DE GESTION THERMIQUE D'UN SYSTÈME POUR LA COGÉNÉRATION D'ÉLECTRICITÉ ET DE CHALEUR ET SYSTÈME ASSOCIÉ**
VERFAHREN ZUR WÄRMEVERWALTUNG EINES SYSTEMS ZUR KRAFT-WÄRME-KOPPLUNG SOWIE ZUGEHÖRIGES SYSTEM
METHOD FOR THERMALLY MANAGING A SYSTEM FOR THE COGENERATION OF ELECTRICITY AND HEAT AND ASSOCIATED SYSTEM

(30) Priorité: 19.03.2015 FR 1552272
(43) Date de publication de la demande: 24.01.2018
(73) Titulaire: Electricité de France, 75008 Paris (FR)
(72) Inventeur: BRISSE, Annabelle, 67850 Herrlisheim (FR); FU, Qingxi, 76149 Karlsruhe (DE)
(74) Mandataire: Cabinet Plasseraud
(86) Numéro de dépôt international: PCT/FR2016/050601
(87) Numéro de publication internationale: WO 2016/146956

(56) Documents cités:
- WO-A1-2012/123290
- FR-A1- 2 992 400
- FR-A1- 3 000 303
- US-A1- 2006 199 051
- US-A1- 2011 180 396

## Description

### DOMAINE TECHNIQUE

L'invention se rapporte au domaine de la gestion thermique de systèmes pour la cogénération d'électricité et de chaleur. L'invention concerne également un système pour le stockage d'énergie et la cogénération d'électricité et de chaleur auquel le procédé peut être appliqué. Le système en question comprend notamment une pile à combustible fonctionnant avec de l'hydrogène.

### ARRIÈRE-PLAN TECHNOLOGIQUE

Le développement de sources d'énergie renouvelable s'accompagne du développement de technologies optimisant leur utilisation et leurs rendements. Parmi les différentes sources d'énergie renouvelable disponibles, les piles à combustibles, capables de générer de l'électricité tout en limitant l'émission de gaz à effet de serre, suscitent un grand intérêt.

Les piles à combustibles sont des dispositifs électrochimiques dont le fonctionnement repose sur des réactions chimiques d'oxydo-réduction pour produire de l'électricité : une oxydation d'un combustible réducteur sur une électrode et une réduction d'un oxydant sur une autre électrode.

Les piles à combustible à hydrogène peuvent notamment fonctionner selon deux réactions chimiques, suivant que la pile à combustible est en régime d'électrolyse ou en régime de décharge. Les piles à combustible à hydrogène peuvent fonctionner suivant diverses réactions chimiques impliquant par exemple de l'oxygène, du méthanol, du méthane, ou simplement du dihydrogène. Il sera fait référence par simplicité au cas des piles à combustible impliquant oxygène et hydrogène.

Une première réaction exothermique permet à la pile à combustible de produire électricité et chaleur par recombinaison de dihydrogène et dioxygène :

| | |
|---|---|
| H₂ + 1/2O₂ → H₂O + 2e⁻ + Q | réaction exothermique (décharge) |

Une deuxième réaction endothermique permet d'effectuer une électrolyse avec une pile à combustible et produire de l'hydrogène et de l'oxygène, moyennant un apport d'énergie sous forme d'électricité et de chaleur :

H₂O +Q + 2e⁻ → H₂ + 1/2O₂ réaction endothermique (électrolyse)

La chaleur Q et l'électricité nécessaires à la réaction endothermique pour produire de l'hydrogène à une température et pression donnée dépendent en partie de l'alimentation électrique utilisée pour effectuer l'électrolyse. La tension électrique appliquée à la pile à combustible en régime d'électrolyse permet en effet de définir trois modes de fonctionnement différents : allothermique, autothermique ou exothermique.

Le mode autothermique correspond à un mode dans lequel la seule alimentation électrique permet de fournir l'ensemble de l'énergie nécessaire à la réaction endothermique, c'est-à-dire que la quantité d'énergie Q consommée par la réaction endothermique est intégralement compensée par l'apport d'énergie électrique. La tension appliquée à une pile à combustible chargée en mode autothermique est appelée thermoneutre.

Le mode allothermique correspond à une tension appliquée inférieure à la tension thermoneutre. Ce mode semble a priori intéressant car il implique une plus faible consommation électrique. Cependant, il suppose un apport extérieur de chaleur dans la pile à combustible qui est susceptible d'introduire des gradients de température nuisibles à l'intégrité de la pile. Par ailleurs, dans le cas de l'hydrolyse, le mode allothermique présente l'inconvénient de fournir un rendement de conversion d'eau en hydrogène plus faible qu'en régime autothermique car la réaction endothermique est limitée par la quantité d'électrons disponibles pour l'hydrolyse. La seule manière de compenser ce déficit est d'augmenter la taille des cellules d'une pile électrochimique ce qui ne s'avère pas être une solution ergonomique.

Le mode exothermique correspond à une tension supérieure à la tension thermoneutre. Pour de telles valeurs de tension, l'apport d'énergie sous forme électrique est tel qu'il produit par lui-même plus de chaleur que nécessaire dans la réaction endothermique. Ce mode consomme plus d'énergie électrique mais assure un bon rendement de conversion sans nécessiter une augmentation de la taille des cellules. Par contre, il induit des variations de température au sein de la pile à combustible qui peuvent affecter son intégrité structurelle.

Ces différents modes de fonctionnement en fonction du pilotage de l'électrolyse dans une pile à combustible requièrent une gestion thermique et plus généralement énergétique particulière.

Les piles à combustible à hydrogène et oxygène présentent l'avantage de ne pas émettre de gaz à effet de serre. L'un des inconvénients de leur fonctionnement réside dans le fait que les réactions d'électrolyse et décharge ont un comportement thermodynamique très différent : l'une produit électricité et chaleur et requiert un apport de réactifs gazeux, l'autre consomme électricité et chaleur et produit un dégagement de gaz. Par conséquent, afin de gérer les flux de réactifs, de produits, d'électricité et de chaleur, une gestion thermique particulière est requise.

Le problème de l'acheminement de l'hydrogène est avantageusement résolu en prévoyant un dispositif permettant de stocker l'hydrogène produit lors de la réaction endothermique afin de le restituer en tant que réactif pour alimenter la pile à combustible en régime de décharge.

Plusieurs solutions techniques pour stocker l'hydrogène et ensuite le restituer sont envisageables. Le document WO2013/190024 propose un dispositif permettant le stockage réversible par adsorption d'hydrogène dans un matériau. Lors du stockage d'hydrogène dans le matériau, de la chaleur est libérée ; l'hydrogène stocké peut être ensuite libéré en appliquant de la chaleur sur le matériau. Outre le dispositif de stockage proposé dans le document WO2013/190024, d'autres dispositifs de stockage peuvent être utilisés, par exemple des dispositifs dans lesquels le matériau peut être stocké sous pression dans des bouteilles ou cylindres.

Le dispositif de stockage réversible d'hydrogène du document WO2013/190024 permet d'optimiser les flux de matière depuis et vers la pile à combustible grâce à des connexions entre pile à combustible et dispositif de stockage réversible.

Cependant, un tel système ne permet pas d'atteindre des rendements énergétiques typiquement supérieurs à des valeurs comprises entre 30% et 50%. Ce rendement global faible peut être attribué aux pertes thermiques non valorisées qui surviennent dans le fonctionnement d'un tel système comme par exemple : la dissipation de chaleur lors du stockage de l'hydrogène dans le matériau, des pertes ohmiques dans la pile à combustible, ou encore l'énergie nécessaire pour effectuer l'électrolyse et libérer l'hydrogène du matériau.

Il est par conséquent recherché un procédé de gestion thermique d'un système comprenant une pile à combustible et un dispositif de stockage et libération d'hydrogène dans un matériau qui permette d'augmenter le rendement énergétique global du système. Un système dont les caractéristiques permettent une augmentation du rendement énergétique global est également recherché. US2011180396 décrit un système comprenant un électrolyseur, une pile à combustible et des réservoirs de stockage d'eau et hydrogène.

### EXPOSE DE L'INVENTION

Pour répondre aux problèmes exposés ci-avant, la présente invention propose un procédé de gestion thermique d'un système destiné au stockage d'énergie et à la cogénération d'électricité et de chaleur, dans lequel le système comprend :
- une pile à combustible apte à produire électricité et chaleur suivant une première réaction exothermique par recombinaison d'oxygène et d'un composé à base d'hydrogène et apte à produire du composé à base d'hydrogène suivant une deuxième réaction endothermique par décomposition d'un fluide comprenant de l'hydrogène,
- un dispositif de stockage et libération d'hydrogène, comprenant un matériau configuré pour générer de la chaleur lors du stockage du composé à base d'hydrogène et libérer le composé à base d'hydrogène en présence de chaleur. Le procédé comprend :
lorsque la pile à combustible fonctionne suivant la deuxième réaction endothermique :
- acheminer le composé à base d'hydrogène libéré par la deuxième réaction endothermique vers le matériau que comprend le dispositif de stockage et libération d'hydrogène, générant ainsi de la chaleur ;
- acheminer au moins une partie de la chaleur issue du matériau vers une source du fluide comprenant de l'hydrogène, de sorte que le fluide comprenant de l'hydrogène soit porté à une température prédéterminée ; et
- alimenter la pile à combustible
   en fluide porté à la température prédéterminée et
   en électricité
pour la décomposition du fluide porté à une température prédéterminée, générant ainsi le composé à base d'hydrogène destiné à être stocké dans le matériau du dispositif de stockage et libération d'hydrogène.

Le composé à base d'hydrogène employé dans le procédé peut être tout combustible à base d'hydrogène présent dans une pile à combustible. Il est ainsi possible de citer à titre d'exemple : le méthanol, le méthane, ou simplement le dihydrogène. Par soucis de simplicité, il sera ci-après fait référence à l'hydrogène en guise de composé à base d'hydrogène.

L'invention valorise au mieux l'énergie produite sous forme de chaleur lors du stockage de l'hydrogène dans le matériau du dispositif de stockage et libération d'hydrogène. L'invention propose d'utiliser la chaleur produite lors du stockage d'hydrogène dans le matériau non pas pour alimenter la réaction endothermique dans la pile à combustible mais pour porter un fluide comprenant de l'hydrogène à une température prédéterminée. Le fluide en question sert à alimenter la pile à combustible en réactif pour la réaction endothermique, par exemple de l'eau dans le cas d'une hydrolyse. Cette température prédéterminée est fonction de la nature de la pile à combustible utilisée. En effet, certaines piles à combustible fonctionnent en régime d'électrolyse à des températures inférieures à 100 °C tandis que d'autres sont prévues pour une électrolyse à température plus élevée, pouvant typiquement aller jusqu'à 1000 °C.

Contrairement aux approches classiques dans l'optimisation de la gestion thermique d'un système de stockage d'énergie et de cogénération d'électricité et de chaleur, l'invention ne réutilise pas de la chaleur produite au moment de l'électrolyse pour équilibrer la réaction endothermique dans la pile à combustible. Étant donné le risque d'endommagement qu'encourt une pile à combustible soumise à des gradients de températures, de nombreux efforts sont généralement déployés pour s'assurer que la pile reçoive toute la chaleur requise pour que la réaction endothermique ne modifie pas la température fixe et homogène régnant dans la pile en régime d'électrolyse. Ce souci de maintenir la température dans la pile à combustible fixe et homogène est particulièrement présent lorsque l'électrolyse s'effectue en mode allothermique, plus économe en électricité.

La solution proposée par la présente invention se fonde donc sur une approche originale. La chaleur dégagée par le matériau lors du stockage de l'hydrogène est valorisée en amont de la pile à combustible, dans une source de fluide utilisée pour alimenter la pile à combustible en réactifs. En portant ce fluide à la température qui est prévue pour la réaction endothermique dans la pile à combustible, l'invention évite de créer des gradients de température nuisibles dans la pile, et évite le recours à une source de chaleur extérieure pour chauffer ce fluide. Le fluide alimentant la pile à combustible en réactif peut alors agir en tant que fluide caloporteur et porter la pile efficacement à sa température d'électrolyse sans créer de gradients. En effet, la circulation du fluide dans la pile à combustible permet d'assurer un transfert de chaleur rapide par convection et conduction.

D'autre part, en acheminant la chaleur à l'extérieur de la pile à combustible pour chauffer un fluide, l'invention offre une certaine souplesse dans le choix de la température de fonctionnement de la pile à combustible, dans la mesure où la quantité de chaleur transférée au fluide est ajustable pour atteindre toute température d'électrolyse souhaitée.

Le procédé de l'invention permet d'augmenter le rendement énergétique global du système pour atteindre un rendement de l'ordre de 80%.

De manière avantageuse, le procédé peut en outre comprendre, lorsque la pile à combustible fonctionne suivant la première réaction exothermique :
- acheminer au moins une partie de la chaleur produite par la première réaction exothermique depuis la pile à combustible vers le matériau, libérant ainsi le composé à base d'hydrogène stocké dans le matériau ; et
- acheminer le composé à base d'hydrogène issu du matériau vers la pile à combustible, en vue d'alimenter la première réaction exothermique.

L'utilisation d'une partie de la chaleur produite par la réaction exothermique pour libérer l'hydrogène stocké dans le matériau concourt également à améliorer le rendement énergétique global du système jusqu'à atteindre une valeur de l'ordre de 80%. Par ailleurs, ces flux d'hydrogène et de chaleur concordent parfaitement avec les besoins du système : l'hydrogène libéré grâce à une partie de la chaleur de la réaction endothermique sert à alimenter la pile à combustible en régime de décharge.

Avantageusement, le procédé peut en outre comprendre, lorsque la pile à combustible fonctionne suivant la première réaction exothermique :
- acheminer au moins une partie de la chaleur issue de la pile à combustible vers une source froide ; et
lorsque la pile à combustible fonctionne suivant la deuxième réaction endothermique :
- acheminer au moins une partie de la chaleur issue du matériau vers la source froide.

L'utilisation de la chaleur produite par le système peut servir dans tout type d'installation, par exemple pour le chauffage domestique. La source froide peut par exemple être un échangeur de chaleur ou un ballon d'eau chaude pour l'eau chaude sanitaire.

Selon un mode de réalisation, le procédé comprend en outre :
- chauffer le fluide jusqu'à une température prédéterminée comprise entre 300°C et 1000°C.

Le fluide comprenant de l'hydrogène peut par exemple être de l'eau. En fixant la température à une valeur comprise entre 300°C et 1000°C, les fluides utilisés dans les piles à combustible en particulier l'eau, sont à l'état vapeur. D'autre part l'électricité nécessaire pour effectuer la réaction endothermique est réduite à mesure que la température d'électrolyse augmente.

Selon un mode de réalisation, le procédé comprend en outre :
- chauffer le fluide jusqu'à une température prédéterminée comprise entre 650°C et 850°C.

Une température de fluide comprenant de l'hydrogène comprise entre 650°C et 850°C permet d'atteindre un optimum de rendement énergétique global dans le système, en particulier avec des piles à combustible à base d'oxydes céramiques solides. La quantité d'énergie électrique requise par la réaction endothermique est alors plus faible et la chaleur nécessaire à la réaction endothermique peut efficacement être apportée par le fluide lui-même.

Selon un mode de réalisation avantageux, le procédé comprend en outre :
- alimenter la pile à combustible en électricité depuis une source d'énergie ; et
- stocker un surplus d'électricité de la source d'énergie sous forme du composé à base d'hydrogène dans le matériau du dispositif de stockage et libération d'hydrogène par la décomposition du fluide porté à la température prédéterminée dans la pile à combustible fonctionnant suivant la deuxième réaction endothermique.

Ce faisant, le système auquel le procédé est appliqué peut fonctionner conjointement avec des sources d'énergie renouvelables ou bien être branché au réseau électrique. L'énergie électrique peut être stockée sous forme d'hydrogène lors d'un creux de consommation ou un pic de production d'électricité, et restituée ultérieurement en cas de besoin.

L'invention se rapporte également à un système destiné au stockage d'énergie et à la cogénération d'électricité et de chaleur comprenant :
- une pile à combustible apte à produire électricité et chaleur suivant une première réaction exothermique par recombinaison d'oxygène et d'un composé à base d'hydrogène et apte à produite le composé à base d'hydrogène suivant une deuxième réaction endothermique par décomposition d'un fluide comprenant de l'hydrogène en consommant électricité et chaleur ;
- un dispositif de stockage et libération d'hydrogène comprenant un matériau configuré pour générer de la chaleur lors du stockage du composé à base d'hydrogène, et libérer le composé à base d'hydrogène en présence de chaleur.

Le système comprend en outre :
- une source du fluide comprenant de l'hydrogène, ladite source étant reliée à la pile à combustible,
- une première connexion reliant la source dudit fluide au dispositif de stockage et libération d'hydrogène, ladite première connexion étant destinée à acheminer de la chaleur générée lors du stockage du composé à base d'hydrogène dans le matériau vers la source dudit fluide.

Un système possédant une connexion permettant d'acheminer de la chaleur libérée par le dispositif de stockage et libération d'hydrogène permet de mettre en oeuvre le procédé décrit ci-avant. La source de fluide dont il est question peut se présenter sous différentes formes, comme par exemple un réservoir stockant le fluide.

Selon un mode de réalisation, la pile à combustible est reliée au dispositif de stockage et libération d'hydrogène par :
- une deuxième connexion destinée à acheminer le composé à base d'hydrogène libéré par le matériau vers la pile à combustible; et
- une troisième connexion destinée à acheminer la chaleur générée dans la pile à combustible vers le matériau.

De telles connexions permettent d'acheminer l'hydrogène depuis la pile à combustible vers le dispositif de stockage et libération d'hydrogène et vice-versa. Par ailleurs, la chaleur générée lors de la réaction exothermique peut servir à libérer l'hydrogène stocké pour alimenter la pile à combustible en réactif.

Selon un mode de réalisation, le dispositif de stockage et libération d'hydrogène est configuré pour stocker le composé à base d'hydrogène à une pression inférieure à 15 bars.

En fonctionnant à des pressions basses, inférieures à 15 bars, le système encourt moins de risques d'explosion, et ne nécessite pas le recours à un appareillage compliqué et coûteux pour la compression ou la liquéfaction d'hydrogène. Le risque d'explosion à pression élevée résulte du fait que l'hydrogène est un composé hautement inflammable.

Selon un mode de réalisation, le matériau que comprend le dispositif de stockage et libération d'hydrogène comprend un hydrure métallique.

Les hydrures métalliques sont des matériaux particulièrement adaptés pour stocker de l'hydrogène directement par adsorption, sans avoir recours à un réservoir de stockage sous pression.

Selon un mode de réalisation avantageux, l'hydrure métallique comprend de l'hydrure de magnésium.

Plus particulièrement, l'hydrure métallique peut être choisi parmi les composés de la famille du magnésium tels que MgH₂, NaMgH₂, Mg₂FeH₆, Mg2NiH4.

L'hydrure de magnésium est particulièrement intéressant car il présente la plus grande capacité d'adsorption d'hydrogène de tous les hydrures binaires et qu'il génère une grande quantité de chaleur au cours du processus de stockage par adsorption. Ainsi, l'utilisation de ce composé contribue à augmenter le rendement global du système en fournissant plus d'énergie exploitable.

Selon un mode de réalisation, la pile à combustible comprend une cellule céramique à oxyde solide.

Les piles à combustible se composent généralement d'un empilement de cellules élémentaires. Le choix particulier de cellules céramiques à oxydes solides est motivé par le fait que de telles piles à combustible résistent bien aux températures comprises entre 650°C et 850°C. En choisissant d'effectuer l'électrolyse dans la pile à combustible à de telles températures, les besoins en électricité de la réaction endothermique sont réduits, ce qui rend un tel fonctionnement particulièrement économe en électricité. Par ailleurs, la chaleur consommée par la réaction endothermique peut alors être apportée par le fluide chauffé, cette chaleur constituant une part importante de l'énergie consommée par la réaction endothermique.

Selon un mode de réalisation, la cellule céramique à oxyde solide comprend un matériau choisi parmi les matériaux conducteurs ioniques et les matériaux conducteurs protoniques.

Les matériaux conducteurs protoniques fonctionnent généralement bien aux températures comprises entre 400°C et 600°C, tandis que les matériaux conducteurs ioniques sont adaptés pour les températures comprises entre 650°C et 850°C. Un autre avantage dans le choix de ces matériaux réside dans le fait qu'ils ne nécessitent pas le recours à des matériaux nobles agissant en tant que catalyseur dans les piles à combustible basse température. Les piles à combustibles sont alors moins coûteuses à produire.

Notamment, le matériau conducteur ionique peut être de la zircone yttriée et le matériau conducteur protonique un composé à base de baryum, d'indium et de titane.

Selon un mode de réalisation, une source d'énergie alimente la pile à combustible.

Avantageusement, la source d'énergie peut être choisie parmi : une connexion à un réseau électrique et un panneau photovoltaïque.

### DESCRIPTIF DES FIGURES

Le procédé objet de l'invention sera mieux compris à la lecture de la description qui suit d'exemples de réalisations présentés à titre illustratif, aucunement limitatifs, et à l'observation des dessins ci-après sur lesquels :
- la figure 1 est une représentation schématique d'un système pour le stockage et la cogénération d'électricité et de chaleur indiquant les échanges de chaleur et de matière en régime de décharge selon un mode de réalisation de l'invention ; et
- la figure 2 est une représentation schématique d'un système pour le stockage et la cogénération d'électricité et de chaleur indiquant les échanges de chaleur et de matière en régime d'électrolyse selon un mode de réalisation de l'invention ; et
- la figure 3 est une représentation graphique de l'évolution, en fonction de la température de fonctionnement d'une pile à combustible en régime d'électrolyse : de l'énergie libre (enthalpie de Gibbs), de la chaleur consommée par la pile à combustible et de l'enthalpie de la réaction endothermique.

Pour des raisons de clarté, les dimensions des différents éléments représentés sur ces figures ne sont pas nécessairement en proportion avec leurs dimensions réelles. Sur les figures, des références identiques correspondent à des éléments identiques.

### DESCRIPTION DÉTAILLÉE

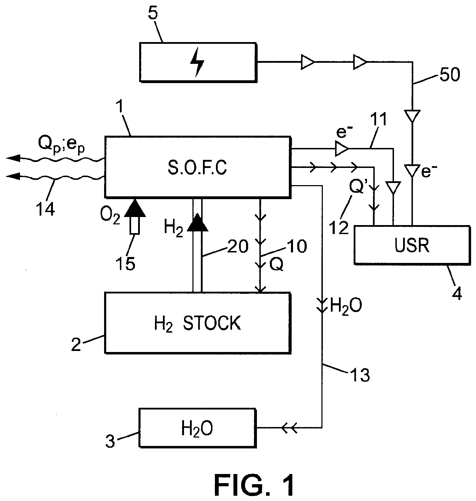

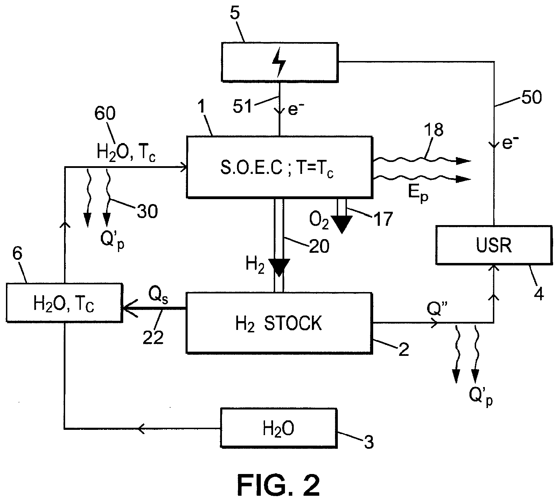

L'invention se rapporte à un procédé original de gestion thermique d'un système pour le stockage d'énergie et la cogénération d'électricité et de chaleur. Le procédé objet de l'invention implique un système tel que représenté schématiquement sur les figures 1 et 2, comprenant une pile à combustible 1, fonctionnant suivant deux réactions chimiques, l'une endothermique et l'autre exothermique, et un dispositif de stockage et libération d'hydrogène 2.

La pile à combustible 1 se compose généralement d'une pluralité de cellules élémentaires comprenant chacune une anode et une cathode. Dans le régime dit « pile à combustible » ou « décharge » représenté par la mention « SOFC » sur la figure 1, la pile à combustible 1 produit électricité et chaleur en recombinant un composé à base d'hydrogène 20 avec de l'oxygène 15. La figure 1 représente à titre d'exemple une pile à combustible à hydrogène, pour laquelle le composé à base d'hydrogène 20 est du dihydrogène H₂. L'invention peut cependant tout à fait être mise en oeuvre sur d'autres catégories de piles à combustible utilisant en guise de composé à base d'hydrogène d'autres composés tels que par exemple le méthanol, ou le méthane.

La figure 1 représente schématiquement la configuration dans laquelle se trouve un système pour le stockage d'énergie et la cogénération d'électricité et de chaleur lorsque la pile à combustible 1 produit électricité et chaleur.

Le dispositif de stockage et libération d'hydrogène 2 se présente typiquement sous la forme d'une enceinte comprenant un matériau apte à stocker un composé à base d'hydrogène tel que le dihydrogène. Dans le mode de réalisation décrit ci-après, le dispositif de stockage et libération d'hydrogène 2 comprend en guise de matériau un hydrure métallique. Les hydrures métalliques présentent l'avantage de permettre un stockage à basse pression, typiquement inférieure à 15 bars, d'une grande quantité de dihydrogène. Le fonctionnement à des pressions faibles réduit les coûts de fabrication et de fonctionnement ainsi que les risques d'explosion lors de l'utilisation d'un tel système. En effet, la plupart des dispositifs de stockage réversible d'hydrogène reposent sur l'utilisation de réservoirs nécessitant une compression d'hydrogène ou bien une liquéfaction, impliquant un coût d'exploitation plus élevé.

Les hydrures de la famille du magnésium, comprenant notamment MgH₂, NaMgH₂, Mg₂FeH₆, Mg2NiH4 sont particulièrement intéressants du fait de leur forte capacité d'adsorption d'hydrogène et de la chaleur qu'ils dégagent en libérant l'hydrogène. Le MgH₂ est l'hydrure métallique qui présente la plus forte capacité d'adsorption d'hydrogène de tous les hydrures binaires. Il permet par ailleurs de générer une grande quantité de chaleur. Le stockage et la libération d'hydrogène dans l'hydrure de magnésium obéit aux réactions suivantes :

MgH₂ + 75 kJ/mol → Mg + H₂

Mg + H₂ → MgH₂ + 75 kJ/mol

Ces deux réactions se produisent typiquement à pression ambiante et pour des températures comprises entre 200 °C et 500 °C.

Le tableau ci-dessous résume les propriétés des différents hydrures de la famille du magnésium utilisables :

| | Quantité d'hydrogène stockée (% de masse) | ΔH (énergie fournie par la réaction) | Densité de stockage de chaleur | Température d'équilibre (en °C) à 1 bar de pression |
|---|---|---|---|---|
| | | (kJ/mol H₂) | (kWh/kg) | |
| MgH₂ | 7.7 | 75 | 0.78 | 280 |
| NaMgH₂ | 4.0 | 86 | 0.47 | 380 |
| Mg₂FeH₆ | 5.5 | 77 | 0.55 | 320 |
| Mg₂NiH₄ | 3.6 | 62 | 0.31 | 250 |

Comme représenté schématiquement sur la figure 1, le régime de décharge de la pile à combustible est assuré par une alimentation en dioxygène O₂ via une rentrée d'air 15 et par un acheminement de dihydrogène H₂ depuis le matériau vers la pile à combustible 1.

La libération de l'hydrogène stocké s'effectue à l'aide de la réaction endothermique décrite ci-avant en fournissant de la chaleur Q produite dans la pile à combustible 1 par la réaction exothermique de recombinaison d'oxygène et d'hydrogène. La chaleur Q ne représente typiquement qu'une portion de la chaleur totale produite par la pile à combustible 1 en régime de décharge. En effet, une autre partie de la chaleur produite, correspondant à une chaleur Q', est avantageusement valorisée en étant acheminée via une connexion 12 pour répondre à un besoin en énergie au niveau d'une source froide. La source froide peut par exemple être le chauffage domestique au sein d'une installation 4 telle qu'un bâtiment.

L'énergie électrique produite par la pile à combustible est également valorisée en alimentant l'installation 4 en énergie, via une connexion électrique 11.

Dans le cas d'une pile à combustible 1 à dihydrogène, la réaction exothermique de la pile en régime de décharge produit de l'eau. Cette eau est avantageusement récupérée via un circuit fluidique 13 pour être stockée dans un réservoir 3.

Il convient de remarquer que le système décrit ci-avant ne peut être totalement fermé. Ainsi, une partie de l'énergie produite dans la pile à combustible se dissipe sous forme de chaleur 14 perdue Qₚ, eₚ. Cette chaleur Qₚ, eₚ n'est pas valorisée dans le système et résulte entre autres des pertes ohmiques dans la pile et de pertes par conduction thermique dans les matériaux constituant le système.

Comme représenté sur la figure 1, l'installation 4 peut en outre être alimentée en énergie électrique via une source d'énergie 5 extérieure au système. Cette source d'énergie peut par exemple être un panneau photovoltaïque ou un réseau électrique. L'installation 4 est reliée à cette source d'énergie par une connexion 50.

Le fonctionnement du système décrit ci-avant lorsque la pile à combustible fonctionne en régime en décharge, c'est-à-dire selon une première réaction exothermique, présente l'avantage d'optimiser les flux d'hydrogène et de chaleur entre pile à combustible 1 et dispositif de stockage et libération d'hydrogène 2. En réorientant une partie de la chaleur Q produite dans la pile à combustible, le système permet de s'affranchir d'une source extérieure de chaleur pour libérer l'hydrogène stocké et assurer une alimentation continue de la réaction exothermique en réactifs.

La figure 2 représente schématiquement la configuration du même système que celui décrit ci-avant lorsque la pile à combustible 1 fonctionne suivant le régime d'électrolyse, aussi appelé SOEC. En électrolyse, la pile à combustible est le siège d'une deuxième réaction endothermique. Dans le cas d'une pile à combustible à dihydrogène, cette réaction endothermique correspond à l'hydrolyse d'eau à une température choisie.

L'hydrolyse suppose par conséquent un approvisionnement en eau H₂O, une source d'énergie électrique et une source d'énergie thermique.

L'électrolyse dans la pile à combustible 1 peut avantageusement être faite en fournissant de l'énergie électrique depuis la source d'énergie 5 extérieure au système, via une connexion 51.

En fonction du type de pile à combustible 1 utilisé, la température régnant dans les cellules de la pile peut typiquement varier entre 20°C et 1000°C.

La réaction endothermique consomme un fluide comprenant de l'hydrogène pour le décomposer en composé à base d'hydrogène. Dans le cas de figure illustré sur la figure 2, le fluide est de l'eau et le composé du dihydrogène. La réaction endothermique produit du dioxygène, évacué vers l'extérieur du système via une sortie 17, et du dihydrogène, acheminé vers le dispositif de stockage et libération d'énergie 2.

De la chaleur Qs est produite lors du stockage d'hydrogène par adsorption dans le matériau à base d'hydrure de magnésium du dispositif de stockage et libération d'hydrogène 2. Une approche classique consisterait à réutiliser cette chaleur pour alimenter la pile à combustible 1 en énergie thermique. Cependant, l'invention propose une autre utilisation de cette chaleur qui s'avère plus rentable et moins coûteuse à mettre en oeuvre.

L'invention ne propose pas d'alimenter la réaction endothermique de la pile à combustible directement en chaleur. Un apport direct de chaleur, généralement adopté dans la gestion thermique d'un système comprenant une pile à combustible, présente plusieurs désavantages. Tout d'abord, les cellules d'une pile à combustible tolèrent peut les variations de température et sont par conséquent exposées à un risque accru de dégradations structurelles en présence de gradients de température. Cette contrainte rend difficile le contrôle minutieux des flux de chaleur vers la pile, d'autant plus que les besoins en chaleur dépendent de la manière dont l'énergie électrique est fournie à la pile à combustible, selon que le mode d'électrolyse soit allothermique, autothermique ou exothermique.

Comme représenté sur la figure 2, le système de l'invention achemine la chaleur Qs via une première connexion 22 vers une source 6 du fluide comprenant de l'hydrogène. Dans le cas de figure représenté sur la figure 2, la source 6 comprend de l'eau. Cette source est portée, grâce à la chaleur issue du dispositif de stockage et libération d'hydrogène 2 à une température prédéterminée Tc. Avantageusement, cette température prédéterminée est choisie pour correspondre à une température T régnant dans la pile à combustible lors du régime d'électrolyse. Il est préféré de choisir une température prédéterminée supérieure à la température régnant dans la pile à combustible 1 de manière à ce que le fluide 60 porté à la température prédéterminée Tc, en l'occurrence l'eau, puisse lui-même apporter la chaleur nécessaire à la réaction endothermique et compenser toute perte thermique éventuelle dans le circuit fluidique reliant la source 6 d'eau à la pile.

La source 6 peut faire partie d'un circuit fluidique fermé incorporant le réservoir d'eau 3, et des connexions permettant la circulation du fluide entre le réservoir et la pile à combustible 1.

La chaleur Qs peut ne pas correspondre à toute l'énergie thermique générée par le matériau adsorbant l'hydrogène. Dans un tel cas de figure, et comme représenté figure 2, la portion de chaleur Q" résultante générée par le matériau lors de l'adsorption d'hydrogène peut être valorisée en étant fournie à l'installation 4.

Des pertes thermiques Q'ₚ peuvent survenir dans le circuit fluidique acheminant l'eau vers la pile, ainsi que dans une connexion reliant le dispositif de stockage et libération d'hydrogène 2 à l'installation 4.

L'utilisation d'eau portée à une température prédéterminée Tc assure une gestion thermique simple et efficace dans le système. En effet, la chaleur libérée par l'hydrure lors du stockage d'hydrogène est utilisée pour vaporiser l'eau entrant dans la pile dans le régime d'électrolyse. Cette vapeur est chauffée à la température de fonctionnement de l'électrolyseur via la récupération de la chaleur des gaz de sortie (en l'espèce oxygène et hydrogène) qui peut être récupérée grâce à des échangeurs thermiques haute température. Plutôt que de chauffer directement la cellule céramique, la vapeur d'eau agit comme un fluide caloporteur apte à lisser un gradient de température dans la pile à combustible en régime d'électrolyse. La circulation du fluide permet de maintenir la réaction endothermique à une température stable et choisie par la quantité de chaleur Qs fournie à la source 6. Comme il sera discuté ci-après, le choix de la température prédéterminée Tc à laquelle est portée l'eau dépend d'une part de la nature de la pile à combustible 1 utilisée et d'un choix de gestion thermique privilégiant consommation électrique ou consommation thermique. L'apport thermique fourni par la vapeur surchauffée permet de diminuer la consommation électrique de la réaction d'électrolyse en maintenant le dispositif dans des conditions autothermiques voir allothermiques.

Comme indiqué sur la figure 2, la pile à combustible en régime d'électrolyse est également le siège de pertes d'énergie 18, typiquement par pertes ohmiques Eₚ.

Les figures 1 et 2 représentent deux configurations dans lesquelles se trouve un système pour le stockage d'énergie et la cogénération d'électricité et de chaleur suivant que la pile à combustible 1 soit en régime d'électrolyse (figure 2) ou en régime de décharge (figure 1). Le système décrit ci-avant comprend donc, outre une pile à combustible 1, un dispositif de stockage et libération d'hydrogène 2 et une source 6 d'eau : une première connexion 22 permettant d'acheminer de la chaleur Qs vers la source 6, une deuxième connexion 20 permettant d'assurer un flux d'hydrogène entre la pile à combustible 1 et le dispositif de stockage et libération d'hydrogène 2, et une troisième connexion 10 permettant d'acheminer de la chaleur Q depuis la pile à combustible 1 vers le dispositif de stockage et libération d'hydrogène 2 en régime de décharge.

Les différents flux d'électricité, chaleur et matière entre les différents constituants du système décrit ci-avant font partie d'un procédé objet de la présente invention.

Le procédé de l'invention consiste notamment à acheminer de la chaleur Qs produite dans le dispositif de stockage et libération d'hydrogène pour porter l'eau de la source 6 à la température prédéterminée Tc souhaitée, comme déjà décrit ci-avant.

L'utilisation combinée d'une source d'énergie 5 extérieure et d'un système pour le stockage d'énergie et la cogénération d'électricité et de chaleur permet de lisser les fluctuations de consommation d'énergie électrique dans un réseau électrique de toute taille. En effet, la source d'énergie 5 peut ne pas produire en permanence la quantité d'énergie dont l'installation 4 a besoin. Un panneau photovoltaïque produit ainsi de l'électricité seulement sous certaines conditions d'éclairage qui ne correspondent pas systématiquement avec les besoins de consommation. Le système décrit ci-avant permet ainsi de stocker sous forme d'hydrogène tout surplus d'énergie produite pour ensuite la restituer lorsque la demande en énergie dépasse la production d'énergie.

Utilisée dans un réseau électrique de plus grande taille, un tel système permet de lisser les courbes de consommation et donc simplifier la gestion du réseau électrique en vue d'une production d'énergie plus sûre, moins sujette à des coupures liées à des pics de consommation soudains.

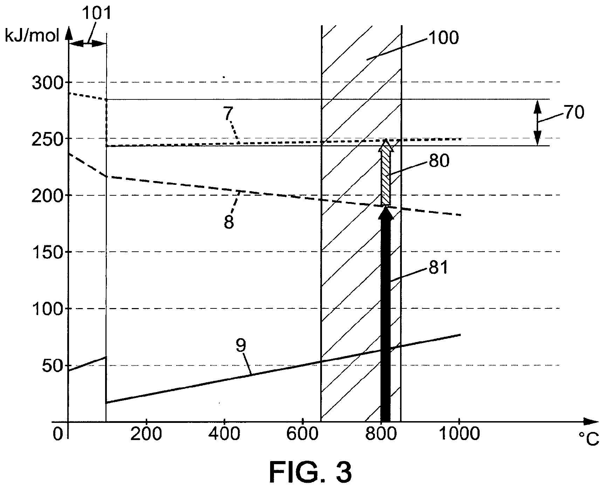

La nature de la pile à combustible 1 utilisée conditionne en partie la température à laquelle peut être portée l'eau au moyen de la chaleur Qs. La figure 3 est un diagramme représentant schématiquement l'évolution de différentes grandeurs thermodynamiques du système en fonction de la température régnant dans la pile à combustible à pression ambiante (1 atmosphère).

La courbe 9 correspond à la chaleur qui doit être fournie à la réaction endothermique qui se produit dans la pile à combustible en régime d'électrolyse. Cette chaleur est égale au produit de la température T dans la pile à combustible 1 par la différence d'entropie ΔS entre l'entropie avant l'électrolyse et après l'électrolyse dans la pile à combustible. Une première phase représentée par la bande 101 de la figure 3 comprend une augmentation linéaire de cette chaleur avec la température T. La baisse soudaine de la chaleur requise à 100 °C s'explique par la transition de phase que subit l'eau qui passe alors de l'état liquide à l'état vapeur. La deuxième phase d'évolution de la courbe 9 est également une croissance linéaire entre 100°C et 1000°C.

Il est intéressant de remarquer que la chaleur requise augmente avec la température T.

La courbe 8 représente la différence d'enthalpie libre ΔG ou encore énergie de Gibbs de la réaction endothermique. Cette énergie correspond à l'énergie minimale requise sous forme électrique pour produire de l'oxygène et de l'hydrogène par hydrolyse.

La courbe 7 représente la différence d'enthalpie ΔH de la réaction endothermique, qui correspond à l'énergie totale à fournir pour pouvoir la réaliser, en fournissant de la chaleur : Q=TΔS et de l'électricité : ΔG.

Comme représenté sur la figure 3, l'énergie totale à fournir à la réaction endothermique est plus importante lorsque l'eau est à l'état liquide qu'à l'état vapeur. Cette différence se traduit par une chute en énergie lorsque l'eau subit une transition de phase liquide/vapeur comme indiqué par l'intervalle 70 sur la figure 3. Par conséquent, l'utilisation de piles à combustible 1 fonctionnant à des températures supérieures à 100°C est préférée.

Il est intéressant de remarquer qu'à l'état vapeur, l'énergie totale à fournir à la réaction endothermique augmente très peu entre 100°C et 1000°C. Du fait de cette valeur à peu près fixe de l'énergie totale, et étant donné que la valeur de la chaleur Q à fournir à la pile augmente avec la température, la valeur de l'énergie à fournir sous forme électrique diminue avec la température.

Par conséquent, en vue d'économiser l'énergie sous forme électrique dépensée pour assurer l'électrolyse, il peut être intéressant d'utiliser des piles à combustible compatibles avec des températures de fonctionnement élevées, notamment comprises entre 650°C et 850°C représentées par la bande 100 sur la figure 3. L'intervalle représenté par la flèche 80 sur la figure 3 correspond à l'énergie thermique à fournir à la pile à 800°C en régime d'électrolyse. Cette chaleur peut être fournie par l'eau à l'état vapeur elle-même. L'énergie électrique à fournir à 800°C est représentée sur la figure 3 par l'intervalle 81.

Les piles à combustibles 1 en céramique à oxydes solides sont les meilleures candidates pour répondre à ce critère. En fonction des matériaux constitutifs de ces piles en céramique, la température de fonctionnement en régime d'électrolyse peut être comprise entre 400°C et 600°C pour les matériaux conducteurs de protons et entre 650°C et 850°C pour les matériaux conducteurs d'ions tels que notamment la zircone yttriée. Les cellules commerciales pour la cogénération sont composées de deux électrodes de type cobalt de lanthane dopé strontium pour l'électrode positive et d'un cermet (mélange de céramique et de métal) de nickel et de zircone yttriée pour l'électrode négative siège de la réaction d'oxydation en régime de décharge et de réduction en régime d'électrolyse.

L'utilisation de piles en céramique à oxydes solides présente également l'avantage qu'elles permettent de réaliser efficacement la réaction endothermique produisant oxygène et hydrogène sans requérir de catalyseur à base de métaux nobles et coûteux comme le platine.

À titre purement illustratif, il sera présenté ci-après un exemple des quantités d'énergie mises en jeu dans le système décrit ci-avant montrant que la gestion thermique et énergétique du système permet d'atteindre des rendements énergétiques globaux voisins de 80%.

Dans ce cas de figure illustratif, il est supposé que la source d'énergie 5 fournit 10 kWh d'énergie électrique à la pile à combustible 1 en régime d'électrolyse. 5% de cette énergie est perdue par pertes thermiques non valorisables, ce qui représente environ 0,5 kWh. Il est supposé qu'en régime d'électrolyse, la pile à combustible 1 a un rendement de 95% par rapport au pouvoir calorifique inférieur et que l'alimentation électrique de la pile engendre une réaction endothermique selon le mode exothermique décrit ci-avant.

L'adsorption d'hydrogène dans le matériau du dispositif de stockage et libération d'hydrogène génère 2,9 kWh d'énergie sous forme de chaleur. Une portion correspondant à 1,9 kWh de cette énergie est utilisée pour vaporiser de l'eau issue de la source 6 pour la porter à une température de 800°C. La portion d'énergie restante de 1,0 kWh est utilisée pour le chauffage d'un bâtiment.

Les pertes thermiques dans le circuit fluidique acheminant la chaleur issue du matériau représente environ 10% des 2,9 kWh d'énergie libérée, soit environ 0,3 kWh.

Ainsi, lorsque la pile à combustible fonctionne selon la deuxième réaction endothermique, 1 kWh de chaleur est utilisé pour répondre à un besoin de consommation, en alimentant l'installation 4 en chaleur.

Lorsque la pile à combustible fonctionne en régime de décharge, selon la première réaction exothermique, les pertes Ep représentent environ 10% de l'énergie totale apportée par l'hydrogène dans la réaction. L'alimentation en hydrogène est assimilée à un apport d'énergie de 11 kWh. Les pertes Ep représentent alors 1,1 kWh d'énergie perdue.

La réaction exothermique génère 5,1 kWh de chaleur et 4,8 kWh d'électricité. Une portion correspondant à 2,9 kWh des 5,1 kWh de chaleur produite est utilisée pour libérer l'hydrogène stocké dans le matériau du dispositif de stockage et libération d'hydrogène. La portion restante de chaleur, correspondant à 2,2 kWh d'énergie est valorisée en chauffant l'installation 4.

Le bilan énergétique de cette réaction est donc le suivant :
- pour 10 kWh d'énergie totale fournie au système par la source d'énergie 5 extérieure, 4,8 kWh d'énergie électrique est produite : ce qui correspond à un rendement électrique total de 48%.
- pour 10 kWh d'énergie totale fournie au système, 1,0 kWh + 2,2 kWh d'énergie sous forme de chaleur est valorisée en étant acheminée vers l'installation 4. Ceci correspond à un rendement thermique total de 32%.

Les 10 kWh d'énergie totale fournie permettent ainsi d'utiliser 4,8kWh + 1,0 kWh + 2,2 kWh soit 8 kWh d'énergie sous forme électrique et thermique. Ainsi, le rendement énergétique total du système est de 80%.

L'invention ne se limite pas exclusivement aux modes de réalisation présentés ci-avant.

À titre d'exemple, le composé à base d'hydrogène utilisé peut être du méthanol, du méthane, ou tout autre composé à base d'hydrogène pouvant intervenir dans la réaction exothermique d'une pile à combustible, sans nécessiter d'autres changements dans l'agencement du système décrit ci-avant.

Le matériau permettant de stocker le composé à base d'hydrogène peut également se présenter sous différentes formes. Outre les hydrures métalliques, tout autre matériau permettant d'adsorber un composé à base d'hydrogène pourrait être envisagé, notamment d'autres familles d'hydrures que celle présentée ci-avant.

L'adsorption du dihydrogène provoque un dégagement de chaleur à une pression donnée. La réaction inverse de libération de dihydrogène nécessite un apport de chaleur extérieure à pression donnée. Cependant, la libération et le stockage d'hydrogène peuvent à titre complémentaire être régulés par une modification de la pression régnant dans le dispositif de stockage et libération d'hydrogène. En diminuant la pression, la chaleur requise pour libérer l'hydrogène stocké est réduite. Une combinaison des deux paramètres : pression et chaleur, influençant les réactions de stockage et libération d'hydrogène permet de faire des ajustements de nature à augmenter davantage le rendement global du système.

## Revendications

1. Procédé de gestion thermique d'un système destiné au stockage d'énergie et à la cogénération d'électricité et de chaleur, le système comprenant :
- une pile à combustible (1) apte à produire électricité et chaleur suivant une première réaction exothermique par recombinaison d'oxygène et d'un composé à base d'hydrogène et apte à produire le composé à base d'hydrogène suivant une deuxième réaction endothermique par décomposition d'un fluide comprenant de l'hydrogène,
- un dispositif de stockage et libération d'hydrogène (2), comprenant un matériau configuré pour générer de la chaleur lors du stockage du composé à base d'hydrogène et libérer le composé à base d'hydrogène en présence de chaleur,
le procédé comprenant :
lorsque la pile à combustible fonctionne suivant la deuxième réaction endothermique :
- acheminer le composé à base d'hydrogène libéré par la deuxième réaction endothermique vers le matériau que comprend le dispositif de stockage et libération d'hydrogène, générant ainsi de la chaleur (Qs) ;
le procédé étant **caractérisé en ce qu'**il comprend en outre, lorsque la pile à combustible fonctionne suivant la deuxième réaction endothermique :
- acheminer au moins une partie de la chaleur (Qs) issue du matériau vers une source (6) du fluide comprenant de l'hydrogène, de sorte que le fluide comprenant de l'hydrogène soit porté à une température prédéterminée (Tc) ; et
- alimenter la pile à combustible
en fluide (60) porté à la température prédéterminée (Tc) et
en électricité
pour la décomposition du fluide porté à une température prédéterminée, générant ainsi le composé à base d'hydrogène destiné à être stocké dans le matériau du dispositif de stockage et libération d'hydrogène.

2. Procédé de gestion thermique selon la revendication 1, comprenant en outre, lorsque la pile à combustible fonctionne suivant la première réaction exothermique :
- acheminer au moins une partie de la chaleur produite par la première réaction exothermique depuis la pile à combustible vers le matériau, libérant ainsi le composé à base d'hydrogène stocké dans le matériau ; et
- acheminer le composé à base d'hydrogène issu du matériau vers la pile à combustible, en vue d'alimenter la première réaction exothermique.

3. Procédé de gestion thermique selon l'une quelconque des revendications précédentes, comprenant en outre, lorsque la pile à combustible fonctionne suivant la première réaction exothermique :
- acheminer au moins une partie de la chaleur issue de la pile à combustible vers une source froide ; et
lorsque la pile à combustible fonctionne suivant la deuxième réaction endothermique :
- acheminer au moins une partie de la chaleur issue du matériau vers la source froide.

4. Procédé de gestion thermique selon l'une quelconque des revendications précédentes, comprenant en outre :
- chauffer le fluide jusqu'à une température prédéterminée comprise entre 300°C et 1000°C.

5. Procédé de gestion thermique selon la revendication 4, comprenant en outre :
- chauffer le fluide jusqu'à une température prédéterminée comprise entre 650°C et 850°C.

6. Procédé de gestion thermique selon l'une quelconque des revendications précédentes, comprenant en outre :
- alimenter la pile à combustible en électricité depuis une source d'énergie ; et
- stocker un surplus d'électricité de la source d'énergie sous forme du composé à base d'hydrogène dans le matériau du dispositif de stockage et libération d'hydrogène par la décomposition du fluide porté à la température prédéterminée dans la pile à combustible fonctionnant suivant la deuxième réaction endothermique.

7. Système destiné au stockage d'énergie et à la cogénération d'électricité et de chaleur comprenant :
- une pile à combustible (1) apte à produire électricité et chaleur suivant une première réaction exothermique par recombinaison d'oxygène et d'un composé à base d'hydrogène et apte à produite du composé à base d'hydrogène suivant une deuxième réaction endothermique par décomposition d'un fluide comprenant de l'hydrogène en consommant électricité et chaleur ;
- un dispositif de stockage et libération d'hydrogène (2) comprenant un matériau configuré pour générer de la chaleur lors du stockage du composé à base d'hydrogène, et libérer le composé à base d'hydrogène en présence de chaleur ;
**caractérisé en ce que** le système comprend en outre
- une source (6) dudit fluide comprenant de l'hydrogène, ladite source étant reliée à la pile à combustible,
- une première connexion (22) reliant la source dudit fluide au dispositif de stockage et libération d'hydrogène, ladite première connexion étant destinée à acheminer de la chaleur générée lors du stockage du composé à base d'hydrogène dans le matériau vers la source dudit fluide.

8. Système selon la revendication 7, dans lequel la pile à combustible est reliée au dispositif de stockage et libération d'hydrogène par :
- une deuxième connexion (20) destinée à acheminer le composé à base d'hydrogène libéré par le matériau vers la pile à combustible; et
- une troisième connexion (10) destinée à acheminer la chaleur générée dans la pile à combustible vers le matériau.

9. Système selon l'une quelconque des revendications 7 ou 8, dans lequel le dispositif de stockage et libération d'hydrogène est configuré pour stocker le composé à base d'hydrogène à une pression inférieure à 15 bars.

10. Système selon l'une quelconque des revendications 7 à 9, dans lequel le matériau que comprend le dispositif de stockage et libération d'hydrogène comprend un hydrure métallique.

11. Système selon la revendication 10, dans lequel l'hydrure métallique est choisi parmi les composés de la famille du magnésium tels que MgH₂, NaMgH₂, Mg₂FeH₆, Mg2NiH4.

12. Système selon l'une quelconque des revendications 7 à 11, dans lequel la pile à combustible comprend une cellule céramique à oxyde solide.

13. Système selon la revendication 12, dans lequel la cellule céramique à oxyde solide comprend un matériau choisi parmi les matériaux conducteurs ioniques et les matériaux conducteurs protoniques.

14. Système selon la revendication 13, dans lequel le matériau conducteur ionique est de la zircone yttriée et le matériau conducteur protonique un composé à base de baryum, d'indium et de titane.

15. Système selon l'une quelconque des revendications 7 à 14, comprenant en outre une source d'énergie (5) alimentant la pile à combustible.

16. Système selon la revendication 15 dans lequel la source d'énergie est choisie parmi : une connexion à un réseau électrique et un panneau photovoltaïque.

## Patentansprüche

1. Verfahren zur Wärmeverwaltung eines Systems, das zum Speichern von Energie und zur Kraft-Wärme-Kopplung von Strom und Wärme bestimmt ist, wobei das System aufweist:
- eine Brennstoffzelle (1), die geeignet ist, nach einer ersten exothermen Reaktion durch Rekombination von Sauerstoff und einer Verbindung auf Wasserstoffbasis Strom und Wärme zu erzeugen und die geeignet ist, die Verbindung auf Wasserstoffbasis nach einer zweiten endothermen Reaktion durch Zersetzen eines Fluids, das Wasserstoff umfasst, zu erzeugen,
- eine Vorrichtung zum Speichern und Freisetzen von Wasserstoff (2), umfassend ein Material, das konfiguriert ist, um beim Speichern der Verbindung auf Wasserstoffbasis Wärme zu erzeugen und die Verbindung auf Wasserstoffbasis in Anwesenheit von Wärme freizugeben,
wobei das Verfahren aufweist:
wenn die Brennstoffzelle nach der zweiten endothermen Reaktion funktioniert:
- Zuführen der Verbindung auf Wasserstoffbasis, die durch die zweite endotherme Reaktion freigesetzt wird, zu dem Material, das die Vorrichtung zum Speichern und Freisetzen von Wasserstoff umfasst, wodurch auf diese Weise Wärme (Qs) erzeugt wird, wobei das Verfahren **dadurch gekennzeichnet ist, dass** es ferner, wenn die Brennstoffzelle nach der zweiten endothermen Reaktion funktioniert, aufweist:
- Zuführen von mindestens einem Teil der Wärme (Qs), die aus dem Material hervorgegangen ist, zu einer Quelle (6) des Fluids, das Wasserstoff umfasst, derart, dass das Fluid, das Wasserstoff umfasst, auf eine vorbestimmte Temperatur (Tc) gebracht wird und
- Versorgen der Brennstoffzelle
mit Fluid (60), das auf eine vorbestimmte Temperatur (Tc) gebracht wird, und
mit Strom
zum Zersetzen des Fluids, das auf eine vorbestimmte Temperatur gebracht wird, wodurch auf diese Weise die Verbindung auf Wasserstoffbasis erzeugt wird, die dazu bestimmt ist, in dem Material der Vorrichtung zum Speichern und Freisetzen von Wasserstoff gespeichert zu werden.

2. Verfahren zur Wärmeverwaltung nach Anspruch 1, ferner umfassend, wenn die Brennstoffzelle nach der ersten endothermen Reaktion funktioniert:
- Zuführen von mindestens einem Teil der Wärme, die durch die erste endotherme Reaktion erzeugt wird, von der Brennstoffzelle zu dem Material, wodurch auf diese Weise die Verbindung auf Wasserstoffbasis freigesetzt wird, die in dem Material gespeichert wird, und
- Zuführen der Verbindung auf Wasserstoffbasis, die aus dem Material hervorgegangen ist, zu der Brennstoffzelle, um die erste endotherme Reaktion zu speisen.

3. Verfahren zur Wärmeverwaltung nach einem der vorhergehenden Ansprüche, ferner umfassend, wenn die Brennstoffzelle nach der ersten endothermen Reaktion funktioniert:
- Zuführen von mindestens einem Teil der Wärme, die aus der Brennstoffzelle hervorgegangen ist, zu einer Kältequelle und
wenn die Brennstoffzelle nach der zweiten endothermen Reaktion funktioniert:
- Zuführen von mindestens einem Teil der Wärme, die aus dem Material hervorgegangen ist, zu der Kältequelle.

4. Verfahren zur Wärmeverwaltung nach einem der vorhergehenden Ansprüche, ferner umfassend:
- Erhitzen des Fluids bis auf eine vorbestimmte Temperatur zwischen 300 °C und 1.000 °C.

5. Verfahren zur Wärmeverwaltung nach Anspruch 4, ferner umfassend:
- Erhitzen des Fluids bis auf eine vorbestimmte Temperatur zwischen 650 °C und 850 °C.

6. Verfahren zur Wärmeverwaltung nach einem der vorhergehenden Ansprüche, ferner umfassend:
- Versorgen der Brennstoffzelle mit Strom von einer Energiequelle und
- Speichern eines Überschusses an Strom von der Energiequelle in Form von der Verbindung auf Wasserstoffbasis in dem Material der Vorrichtung zum Speichern und Freisetzen durch das Zersetzen des Fluids, das auf eine vorbestimmte Temperatur gebracht wird, in der Brennstoffzelle, die nach der zweiten endothermen Reaktion funktioniert.

7. System, das zum Speichern von Energie und zur Kraft-Wärme-Kopplung von Strom und Wärme bestimmt ist, umfassend:
- eine Brennstoffzelle (1), die geeignet ist, nach einer ersten exothermen Reaktion durch Rekombination von Sauerstoff und einer Verbindung auf Wasserstoffbasis Strom und Wärme zu erzeugen und die geeignet ist, die Verbindung auf Wasserstoffbasis nach einer zweiten endothermen Reaktion durch Zersetzen eines Fluids, das Wasserstoff umfasst, zu erzeugen, indem sie Strom und Energie verbraucht,
- eine Vorrichtung zum Speichern und Freisetzen von Wasserstoff (2), umfassend ein Material, das konfiguriert ist, um beim Speichern der Verbindung auf Wasserstoffbasis Wärme zu erzeugen und die Verbindung auf Wasserstoffbasis in Anwesenheit von Wärme freizugeben,
**dadurch gekennzeichnet, dass** das System ferner aufweist
- eine Quelle (6) des Fluids, das Wasserstoff umfasst, wobei die Quelle mit der Brennstoffzelle verbunden ist,
- einen ersten Anschluss (22), der die Quelle des Fluids mit der Vorrichtung zum Speichern und Freisetzen von Wasserstoff verbindet, wobei der erste Anschluss dazu bestimmt ist, Wärme, die beim Speichern der Verbindung auf Wasserstoffbasis in dem Material erzeugt wird, der Quelle des Fluids zuzuführen.

8. System nach Anspruch 7, wobei die Brennstoffzelle mit der Vorrichtung zum Speichern und Freisetzen von Wasserstoff verbunden ist durch:
- einen zweiten Anschluss (20), der dazu bestimmt ist, die Verbindung auf Wasserstoffbasis, die von dem Material freigesetzt wird, der Brennstoffzelle zuzuführen, und
- einen dritten Anschluss (10), der dazu bestimmt ist, die Wärme, die in der Brennstoffzelle erzeugt wird, dem Material zuzuführen.

9. System nach einem der Ansprüche 7 oder 8, wobei die Vorrichtung zum Speichern und Freisetzen von Wasserstoff konfiguriert ist, um die Verbindung auf Wasserstoffbasis bei einem Druck von unter 15 bar zu speichern.

10. System nach einem der Ansprüche 7 bis 9, wobei das Material, welches die Vorrichtung zum Speichern und Freisetzen von Wasserstoff umfasst, ein Metallhydrid umfasst.

11. System nach Anspruch 10, wobei das Metallhydrid aus den Verbindungen der Magnesiumfamilie wie MgH₂, NaMgH₂, Mg₂FeH₆, Mg₂NiH₄ ausgewählt ist.

12. System nach einem der Ansprüche 7 bis 11, wobei die Brennstoffzelle eine Keramikzelle aus Festoxid umfasst.

13. System nach Anspruch 12, wobei die Keramikzelle aus Festoxid ein Material umfasst, das ausgewählt ist aus den ionisch leitenden Materialien und den protonisch leitenden Materialien.

14. System nach Anspruch 13, wobei das ionisch leitende Material ein mit Yttriumoxid behandeltes Zirkoniumoxid ist und das protonisch leitende Material eine Verbindung auf Basis von Barium, Indium und Titan ist.

15. System nach einem der Ansprüche 7 bis 14, das ferner eine Energiequelle (5) aufweist, die die Brennstoffzelle versorgt.

16. System nach Anspruch 15, wobei die Energiequelle ausgewählt ist aus: einem Anschluss an ein Stromnetz und einem Solarmodul.

## Claims

1. Method for the thermal management of a system intended for the storage of energy and for the cogeneration of electricity and heat, the system comprising:
- a fuel cell (1) capable of producing electricity and heat according to a first exothermic reaction by recombination of oxygen and of a hydrogen-based compound and capable of producing the hydrogen-based compound according to a second endothermic reaction by decomposition of a hydrogen-comprising fluid,
- a device for the storage and release of hydrogen (2), comprising a material configured in order to generate heat during the storage of the hydrogen-based compound and to release the hydrogen-based compound in the presence of heat,
the method comprising:
when the fuel cell operates according to the second endothermic reaction:
- transporting the hydrogen-based compound released by the second endothermic reaction to the material which is comprised by the device for the storage and release of hydrogen, thus generating heat (Qs);
the method being **characterized in that** it additionally comprises, when the fuel cell operates according to the second endothermic reaction:
- transporting at least a portion of the heat (Qs) resulting from the material to a source (6) of the hydrogen-comprising fluid, so that the hydrogen-comprising fluid is brought to a predetermined temperature (Tc); and
- feeding the fuel cell
with fluid (60) brought to the predetermined temperature (Tc) and
with electricity
for the decomposition of the fluid brought to a predetermined temperature, thus generating the hydrogen-based compound intended to be stored in the material of the device for the storage and release of hydrogen.

2. Thermal management method according to Claim 1, additionally comprising, when the fuel cell operates according to the first exothermic reaction:
- transporting at least a portion of the heat produced by the first exothermic reaction from the fuel cell to the material, thus releasing the hydrogen-based compound stored in the material; and
- transporting the hydrogen-based compound resulting from the material to the fuel cell, for the purpose of feeding the first exothermic reaction.

3. Thermal management method according to either one of the preceding claims, additionally comprising, when the fuel cell operates according to the first exothermic reaction:
- transporting at least a portion of the heat resulting from the fuel cell to a cold source; and
when the fuel cell operates according to the second endothermic reaction:
- transporting at least a portion of the heat resulting from the material to the cold source.

4. Thermal management method according to any one of the preceding claims, additionally comprising:
- heating the fluid up to a predetermined temperature of between 300°C and 1000°C.

5. Thermal management method according to Claim 4, additionally comprising:
- heating the fluid up to a predetermined temperature of between 650°C and 850°C.

6. Thermal management method according to any one of the preceding claims, additionally comprising:
- feeding the fuel cell with electricity from an energy source; and
- storing a surplus of electricity from the energy source in the form of the hydrogen-based compound in the material of the device for the storage and release of hydrogen by the decomposition of the fluid brought to the predetermined temperature in the fuel cell operating according to the second endothermic reaction.

7. System intended for the storage of energy and for the cogeneration of electricity and heat, comprising:
- a fuel cell (1) capable of producing electricity and heat according to a first exothermic reaction by recombination of oxygen and of a hydrogen-based compound and capable of producing the hydrogen-based compound according to a second endothermic reaction by decomposition of a hydrogen-comprising fluid with the consumption of electricity and heat;
- a device for the storage and release of hydrogen (2), comprising a material configured in order to generate heat during the storage of the hydrogen-based compound and to release the hydrogen-based compound in the presence of heat;
**characterized in that** the system additionally comprises
- a source (6) of the said hydrogen-comprising fluid, the said source being connected to the fuel cell,
- a first connection (22) connecting the source of the said fluid to the device for the storage and release of hydrogen, the said first connection being intended to transport heat generated during the storage of the hydrogen-based compound in the material to the source of the said fluid.

8. System according to Claim 7, in which the fuel cell is connected to the device for the storage and release of hydrogen by:
- a second connection (20) intended to transport the hydrogen-based compound released by the material to the fuel cell; and
- a third connection (10) intended to transport the heat generated in the fuel cell to the material.

9. System according to either one of Claims 7 and 8, in which the device for the storage and release of hydrogen is configured in order to store the hydrogen-based compound at a pressure of less than 15 bars.

10. System according to any one of Claims 7 to 9, in which the material comprised by the device for the storage and release of hydrogen comprises a metal hydride.

11. System according to Claim 10, in which the metal hydride is chosen from the compounds of the magnesium family, such as MgH₂, NaMgH₂, Mg₂FeH₆ and Mg₂NiH₄.

12. System according to any one of Claims 7 to 11, in which the fuel cell comprises a ceramic solid oxide cell.

13. System according to Claim 12, in which the ceramic solid oxide cell comprises a material chosen from ion-conducting materials and proton-conducting materials.

14. System according to Claim 13, in which the ion-conducting material is yttrium-comprising zirconia and the proton-conducting material is a compound based on barium, indium and titanium.

15. System according to any one of Claims 7 to 14, additionally comprising an energy source (5) feeding the fuel cell.

16. System according to Claim 15, in which the energy source is chosen from: a connection to a power grid and a photovoltaic panel.
